# EUROPÄISCHE PATENTSCHRIFT

(11) **EP 1 315 642 B1**
(45) Veröffentlichungstag und Bekanntmachung des Hinweises auf die Patenterteilung: **25.02.2009**
(21) Anmeldenummer: 01943048.7
(22) Anmeldetag: 10.05.2001
(51) Int. Cl.: B60R 16/02

(54) **VERFAHREN UND SYSTEM ZUR AKUSTISCHEN FUNKTIONSSTEUERUNG IM KRAFTFAHRZEUG**
METHOD AND SYSTEM FOR ACOUSTIC FUNCTION CONTROL IN MOTOR VEHICLES
PROCEDE ET SYSTEME DE COMMANDE ACOUSTIQUE DE FONCTIONS DANS UN VEHICULE AUTOMOBILE

(30) Priorität: 29.07.2000 DE 10037023
(43) Veröffentlichungstag der Anmeldung: 04.06.2003
(73) Patentinhaber: ROBERT BOSCH GMBH, 70442 Stuttgart (DE)
(72) Erfinder: KOENIG, Winfried, 76327 Pfinztal (DE)
(86) Internationale Anmeldenummer: PCT/DE2001/001772
(87) Internationale Veröffentlichungsnummer: WO 2002/009978

(56) Entgegenhaltungen:
- EP-A- 0 794 089
- EP-A- 0 856 432
- EP-A- 0 963 876
- FR-A- 2 570 037

## Beschreibung

### Stand der Technik

Die Erfindung betrifft ein Verfahren und ein Steuersystem zur akustischen Funktionssteuerung im Kraftfahrzeug mittels eines gesprochene Kommandos empfangenden und in entsprechende Steuersignale umsetzenden Spracheingabesystems, welches durch ein manuell zu betätigendes Bedienelement aktivierbar ist und auf die Aktivierung hin eine Anzeige seiner Bereitschaft, ein Sprachkommando zu empfangen, an eine Bedienperson ausgibt.

Aus EP 0794089 A2 ist es bekannt, dass bei einem Sprachbediensystem eine haptische Rückmeldung gegeben werden kann. Vorliegend wird eine haptische Rückmeldung über den eingestellten Wert und den Wertebereich einer zugewiesenen Bedienfunktion gegeben, wobei die Bedienfunktion dem Sprachbediensystem zugewiesen ist.

Derzeit müssen Spracheingabesysteme vom Benutzer kurz vor der Eingabe eines relevanten Sprachkommandos aktiviert werden. Eine derartige, sogenannte "Push-To-Talk"-Aktivierung wird üblicherweise über einen Drucktaster am Lenkradkranz durchgeführt. Das System muss dem Benutzer zurückmelden, wann es bereit ist, auf sein Kommando zu hören, d.h. eine Bereitschaftsanzeige, liefern. Bekannt ist, diese Anzeige der Bereitschaft über einen Farbwechsel eines optischen Symbols auf einem Display oder durch einen kurzen, einmaligen Ton zu realisieren. Da im realen Straßenverkehr die Benutzung der Spracheingabe meist eine Nebenaufgabe neben dem sicheren Führen des Fahrzeugs ist und der Fahrer durch die eigentliche Fahraufgabe oft erheblich geistig beansprucht wird, kann er die optische Symbolanzeige auf dem Display übersehen, die akustische Rückmeldung überhören oder auch vergessen, dass die Rückmeldung bereits erfolgt ist. Somit ist er im Ungewissen über den Zustand des Systems, was zu Bedienfehlern, Fehlfunktionen und als Folge zu mangelnder Akzeptanz eines durch Spracheingabe funktionierenden Funktionssteuerungssystems im Kraftfahrzeug durch den Benutzer führen kann.

### Aufgabe und Vorteile der Erfindung

Es ist Aufgabe der Erfindung, ein gattungsgemäßes Verfahren und ein gattungsgemäßes Steuersystem so zu ermöglichen, dass die Spracheingabe-Funktionssteuerung im Kraftfahrzeug vereinfacht und deren Funktionssicherheit erhöht wird. Gleichzeitig soll in einfacher Weise Klarheit über den Systemzustand ohne Blickzuwendung und ohne Belästigung von Beifahrern erzielt und die Akzeptanz derartiger Spracheingabesysteme zur Fuhktionssteuerung im Kraftfahrzeug verbessert werden.

Es ist auch Aufgabe der Erfindung, ein besonders für das erfindungsgemäße Steuersystem geeignetes kombiniertes Bedien-/Anzeigeelement anzugeben.

Dadurch, dass die Anzeige des Bereitschaftszustands durch eine die Tastsensorik der bedienenden Hand der Bedienperson unmittelbar ansprechende mechanische Auslenkung des kombinierten Bedien-/Anzeigeelements oder eines Teils desselben aus einer bestimmten Lage ausgeführt wird, wird der Fahrer über den Zustand: Bereit oder Nicht Bereit eines Spracheingabesystems permanent informiert, ohne den Blick auf ein besonderes Display richten zu müssen. Außerdem wird dadurch der richtige Zeitpunkt für ein Sprachkommando dem Fahrer deutlich signalisiert, so dass die Erkennungsrate der Spracherkennung im Spracheingabesystem verbessert wird.

Nach dem Erkennen eines gültigen Sprachkommandos kann das Steuersystem wiederum anzeigen, dass es im Augenblick nicht mehr bereit ist für die Eingabe eines weiteren Kommandos. Dazu kann das kombinierte Bedien-/Anzeigeelement bzw. der Teil desselben wieder in seinen ursprünglichen Zustand rückgestellt werden.

Die Bereitschaftsanzeige durch mechanische Auslenkung des Bedien-/Anzeigeelements oder eines Teils desselben kann in einer Ausführungsform statisch erfolgen, indem das Bedien/Anzeigeelement oder ein Teil desselben eine statische Form- oder Stellungsveränderung während des Bereitschaftszustandes des Steursystems erfahren.

Wenn, wie beim Ausführungsbeispiel, das Bedien-/Anzeigeelement durch einen Schalter oder Taster am Lenkradkranz verkörpert ist, kann zur Bereitschaftsanzeige der Druckknopf oder Stößel des Drucktasters oder Schalters, der vom Fahrer zum Aktivieren des Systems gedrückt worden war, vom System soweit in sein Gehäuse zurückgezogen werden, dass der Finger der bedienenden Hand eine Vertiefung bzw. Öffnung im Gehäuse spürt. Diese statische Formveränderung des Bedien-/Anzeigeelements suggeriert dem Benutzer, dass das System wie eine Tür "geöffnet" ist. Diese Analogie lässt sich noch weiter führen, wenn man dem Bedien-/Anzeigeelement z.B. die Form einer erhabenen Ohrmuschel gibt und die Bereitschaft zu hören, d.h. eine gesprochenes Kommando zu empfangen, durch eine Vertiefung der Ohrmuschel signalisiert. Dies wird wiederum durch das Steuersystem veranlasst.

Eine alternative Möglichkeit ist es, die Form bzw. Stellung des Bedien-/Anzeigeelements bzw. eines Teils desselben während der Bereitschaft nicht statisch zu verändern, sondern das Bedien-/Anzeigeelement oder einen Teil desselben zur Anzeige der Bereitschaft in Vibration zu versetzen.

Im Sinne der Erfindung ist eine Vibration ebenfalls als Auslenkung des Bedien-/Anzeigeelements oder eines Teils desselben zu verstehen.

Gemäß der derzeit bevorzugten Ausführungsform ist das kombinierte Bedien-/Anzeigeelement ein am Lenkrad eines Kraftfahrzeugs anbringbarer Taster oder Schalter, dessen beweglicher Teil, das heißt dessen Tast- oder Schaltstößel durch ein im Inneren des Bedien-/Anzeigeelements befindliches elektromotorisches, elektromagnetisches oder piezoelektrisches Aktororgan zur Anzeige des Bereitschaftszustandes bewegt bzw. in Vibration versetzt wird. Stattdessen können aber auch andere bekannte Aktoren verwendet werden.

Nachstehend wird anhand der Zeichnung ein derzeit bevorzugtes Ausführungsbeispiel des erfindungsgemäßen Verfahrens und des Steuersystems sowie ein für das Steuersystem konzipiertes kombiniertes Bedien-/Anzeigeelement beschrieben.

### Zeichnung

Figur 1 zeigt schematisch eine prinzipielle Systemstruktur eines Steuersystems zur akustischen Funktionssteuerung gemäß der Erfindung, und
die Figuren 2 A-C zeigen Funktions-Zeit-Diagramme, die den prinzipiellen zeitlichen Verlauf der Funktionen dess in Figur 1 gezeigten Steuersystems veranschaulichen.

### Ausführungsbeispiel

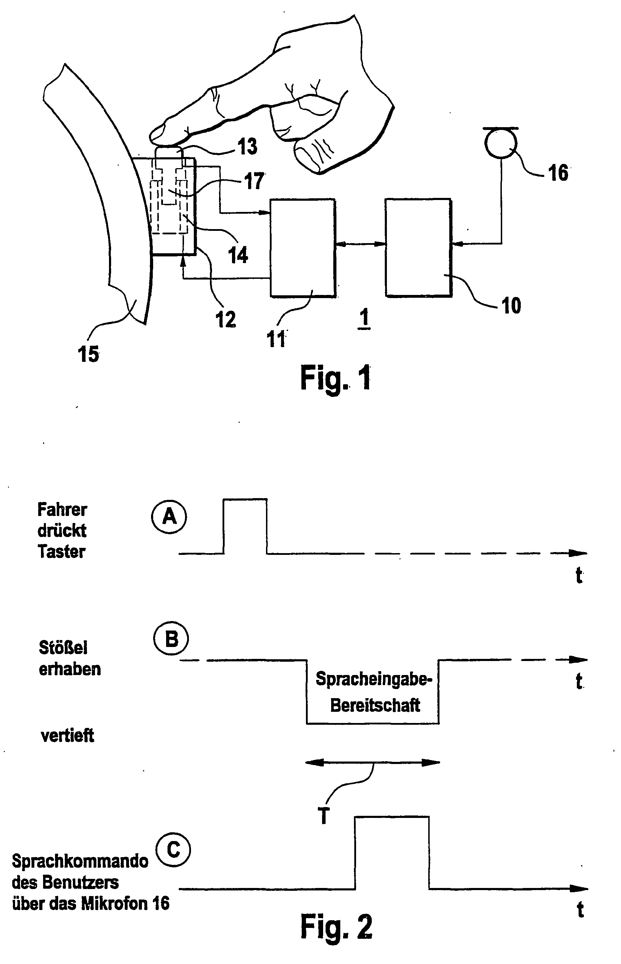

Figur 1 zeigt schematisch und in Form von Funktionsblöcken ein allgemein mit der Ziffer 1 bezeichnetes Steuersystem zur akustischen Funktionssteuerung im Kraftfahrzeug. Über ein Mikrophon 16, ein Spracheingabesystem, das aus einem Spracherkennungsblock 10 und einem Steuerblock 11 besteht, kann das Steuersystem 1 im aktivierten Zustand gesprochene Kommandos von einer Bedienperson empfangen und in Steuersignale zur Steuerung verschiedener Funktionen im Kraftfahrzeug, gegebenenfalls auch um das Kraftfahrzeug, umsetzen.

Die Aktivierung des Systems wird vor der Eingabe eines relevanten Sprachkommandos vom Benutzer durch den Druck eines Fingers seiner Hand auf einen Tast- oder Schaltstößel 13 eines am Lenkradkranz 15 befestigen Tasters oder Schalters 12 ausgeführt, welcher Tastendruck oder Schaltvorgang dem Steuerblock 11 des Systems 1 als Aktivierungssignal zugeleitet wird.

Der in Figur 1 gezeigte Steuerblock 11 dient zur Steuerung des Spracherkennungsblocks 10, zur Aktivierung des Mikrophons 16, zum Einlesen des Schaltzustands des Bedienelements 12 und Betätigung des Stößels zur Bereitschaftsanzeige bzw. zur Auslösung der Vibration.

Das System 1, bzw. der Steuerblock 11 des .Spracheingabesystems, meldet dem Benutzer zurück, wann es bereit ist, auf sein Sprachkommando zu hören, d.h., es liefert eine Bereitschaftsanzeige. Zur Bereitschaftsanzeige wird das kombinierte Bedien-/Anzeigeelement 12, nachdem es durch den Benutzer, z.B. durch Fingerdruck, zur Aktivierung des Systems betätigt wurde, durch den Steuerblock 11 des Systems 1 in einen Zustand gebracht, der mit dem selben Finger bzw. mit anderen Teilen der Hand des Benutzers unmittelbar taktil erfassbar ist. Dazu wird im Ausführungsbeispiel der in das Innere des Bedien-/Anzeigeelementes 12 ragende Stößel 17 des Tasters 13, der vom Fahrer zum Aktivieren gedrückt worden war, z.B. von einem Elektromagneten 14 auf ein Signal vom Steuerblock 11 hin soweit in das Gehäuse des Bedienelements 12 zurückgezogen, dass der Finger eine Vertiefung bzw. Öffnung im Gehäuse spürt. Eine derartige Signalisierung des Bereitschaftszustandes suggeriert dem Benutzer sinnfällig, dass das System wie eine Tür "geöffnet" ist.

Wie erwähnt, lässt sich diese Analogie noch weiter führen, indem man dem kombinierten Bedien-/Anzeigeelement die Form einer Ohrmuschel verleiht und die Bereitschaft des Systems zu hören, d.h. Sprachkommandos anzunehmen, durch eine Vertiefung des Ohres signalisiert.

Statt einen Elektromagneten oder -motors 14 im Inneren des Bedien-/Anzeigeelements 12 zum Zurückziehen und Halten des Stößels 17 des Tasters 13 im Inneren des Gehäuses zu verwenden, können auch Piezo-Aktoren und andere ähnliche bekannte Aktoren verwendet werden.

Eine alternative Ausführung, die in der Figur 1 nicht spezifisch dargestellt ist, kann den Taster 13 zur Bereitschaftsanzeige in Vibration versetzen. Auch damit erfährt das Bedien-/Anzeigeelement-während der Bereitschaft des Systems 1 eine mechanische Auslenkung, die als Vibration unmittelbar taktil erfassbar ist.

Die in den Figuren 2A-2C dargestellten Funktions-Zeit-Diagramme zeigen prinzipiell den zeitlichen Verlauf von Funktionen der in Figur 1 dargestellten Version des Steuersystems 1, dessen Bedien-/Anzeigeelement mit dem herausragendem/zurückgezogenem Taster 13 und Stößel 17 ausgestattet ist.

Der Teil A der Figur 2 zeigt die Aktivierung des Tasters 13 des Bedien-/Anzeigeelements 12 durch den Finger des Benutzers, das Schließen des Kontaktes des Tasters, Einlesen in den Steuerblock 11 und die Aktivierung des Spracherkennungsblocks 10. Im mittleren Teil B zeigt Figur 2, dass nach der Aktivierung das System seine Spracheingabebereitschaft durch Einziehen des Stößels 17 und damit des Tasters 13 in das Gehäuse des Bedien-/Anzeigeelementes 12 signalisiert. Der Doppelpfeil T gibt demnach die Dauer T des Bereitschaftszustandes des Systems an. Während des Bereitschaftszustandes T kann dann gemäß dem unteren Teil C der Figur 2 der Benutzer ein Sprachkommando dem System 1 über das Mikrophon 16 eingeben. Der Spracherkennungsblock 10 erkennt das gesprochene Kommando und setzt dieses in entsprechende Steuersignale für verschiedene, nicht näher spezifizierte, Steueraufgaben im Kraftfahrzeug, gegebenenfalls auch außerhalb des Kraftfahrzeugs (z.B. Öffnen eines Garagentors) um.

Nachdem in das Mikrophon 16 eingegebene Sprachkommando des Benutzers vom Spracherkennungsblock 10 erkannt und in die entsprechenden Steuersignale umgesetzt wurde, zeigt das System 1 über den Steuerblock 11 und das Bedien-/Anzeigeelement 12 wieder an, dass es im Augenblick nicht mehr bereit ist für die Eingabe eines weiteren Kommandos. Dazu wird gemäß dem mittleren Teil B der Figur 2 das Bedien-/Anzeigeelement 12 bzw. dessen Taster 13 wieder in seinen ursprünglichen Zustand gebracht. In dem dargestellten Ausführungsbeispiel ragt dann der Kopf des Tasters 13 wieder aus dem Gehäuse des Bedien-/Anzeigeelements heraus. Im alternativen Beispiel hört dann die Vibration des Tasters auf.

Bei dem oben beispielhaft dargestellten erfindungsgemäßen Verfahren zur akustischen Funktionssteuerung im Kraftfahrzeug sowie dem dazu konzipierten Steuersystem wird der Fahrer über den Zustand des Spracheingabesystems permanent informiert, ohne dass er seinen Blick extra auf ein Display richten müsste. Der Fahrer kann also weiterhin parallel zur Eingabe eines gesprochenen Kommandos seine Augen und Aufmerksamkeit dem Straßengeschehen zuwenden. Durch seine Hand erfährt der Fahrer unmittelbar tastsensorich den richtigen Zeitpunkt für ein Sprachkommando, wodurch die Erkennungsrate des Spracheingabesystems nicht beeinträchtigt wird.

Der Fahrer kann sich stets ein korrektes Bild vom Zustand des Spracheingabesystems machen, so dass er sich im Dialog mit dem Spracheingabesystem sicher fühlt und nicht durch Ärger in seiner Fahrleistung beeinträchtigt wird. Beifahrer werden durch diese Form der Informationsdarbietung nicht belästigt.

## Patentansprüche

1. Verfahren zur akustischen Funktionssteuerung im Kraftfahrzeug mittels eines gesprochene Kommandos empfangenden und in entsprechende Steuersignale umsetzenden Spracheingabesystems (10, 11), welches durch ein manuell zu betätigendes Bedienelement (12) aktivierbar ist, **dadurch gekennzeichnet, dass** auf die Aktivierung hin eine Anzeige seiner Bereitschaft, ein Sprachkommando zu empfangen, an eine Bedienperson ausgegeben wird, dass die Anzeige, ob das Spracheingabesystem bereit ist oder nicht, durch eine die Tastsensorik der bedienenden Hand der Bedienperson unmittelbar ansprechende mechanische Auslenkung des Bedienelements (12) oder eines Teils (13) desselben aus einer bestimmten Lage ausgeführt wird.

2. Verfahren nach Anspruch 1, **dadurch gekennzeichnet, dass** die Auslenkung automatisch beendet oder rückgestellt wird, wenn der Bereitschaftszustand (T) des Spracheingabesystems (10, 11) nach seiner Aktivierung nicht mehr vorliegt.

3. Verfahren nach Anspruch 1 oder 2, **dadurch gekennzeichnet, dass** die Bereitschaftsanzeige durch eine statistische Formveränderung des Bedienelements (12) oder eines Teils (13) desselben erfolgt.

4. Verfahren nach Anspruch 1 oder 2, **dadurch gekennzeichnet, dass** die Bereitschaftsanzeige durch eine Stellungsveränderung des Bedienelements (12) oder eines Teils (13) desselben erfolgt.

5. Verfahren nach Anspruch 1 oder 2, **dadurch gekennzeichnet, dass** die Bereitschaftsanzeige durch eine Vibration des Bedienelements (12) oder eines Teils (13) desselben erfolgt.

6. Steuersystem zur akustischen Funktionssteuerung im Kraftfahrzeug mittels eines gesprochene Kommandos empfangenden und in entsprechende Steuersignale umsetzenden Spracheingabesystems (10, 11), mit einem von einer Bedienperson zur Aktivierung des Systems manuell zu betätigenden Bedienelement (12), **dadurch gekennzeichnet, dass** eine Anzeigevorrichtung vorgesehen ist, mit der der Bedienperson auf die Aktivierung des Spracheingabesystems (10, 11) eine Anzeige der Bereitschaft des Systems, Sprachkommandos zu empfangen, anzeigbar ist, dass die Anzeigevorrichtung Auslenkmittel (14, 17) zur mechanischen Auslenkung des Bedienelementes (12) oder eines Teils (13) desselben aufweist, welche mit dem Spracheingabesystem (10, 11) in Wirkverbindung stehen und von diesem bei dessen Bereitschaft so angesteuert werden, dass der Bereitschaftszustand (T) tastsensorisch unmittelbar der bedienenden Hand der Bedienperson mitteilbar ist.

7. Steuersystem nach Anspruch 6, **dadurch gekennzeichnet, dass** auf die Anzeigevorrichtung Rückstellmittel (11, 14) einwirken, die die Auslenkmittel (14, 17) unmittelbar nach dem Ende des Bereitschaftszustands (T) des Spracheingabesystems rückstellen.

8. Steuersystem nach Anspruch 6 oder 7, **dadurch gekennzeichnet, dass** das Bedienelement (12) ein Schalter oder Taster am Lenkrad (15) ist.

9. Steuersystem nach einem der Ansprüche 6 bis 8, **dadurch gekennzeichnet, dass** die Auslenkmittel (14, 17) Haltemittel (14) aufweisen, die ein von einem Finger der Bedienperson zur Aktivierung des Spracheingabesystems einrückbares Schaltorgan (13) des Bedienelements (12), insbesondere einen Tast- oder Schaltstößel desselben während des Bereitschafszustands (T) statisch im eingerückten Zustand halten.

10. Steuersystem nach einem der Ansprüche 6 bis 9, **dadurch gekennzeichnet, dass** die Auslenkmittel (14, 17) als Haltemittel (14) einen auf das Bedienelement (12) insbesondere das Tast- oder Schaltorgan (13) kraft- und/oder formschlüssig einwirkenden Elektromagneten aufweisen.

11. System nach einem der Ansprüche 6 bis 8, **dadurch gekennzeichnet, dass** die Auslenkmittel Vibrationsmittel aufweisen, die eine Vibration des Bedienelements, insbesondere eines Tast- oder Schaltstößels des am Lenkrad angebrachten Tasters oder Schalters während des Bereitschafszustands des Spracheingabesystems verursachen.

## Claims

1. Method for audible control of functions in a motor vehicle using a voice input system (10, 11) which receives spoken commands and converts them into corresponding control signals and which can be activated by a manually operable operator control element (12), **characterized in that** activation prompts an indication of the readiness thereof to receive a voice command to be output to an operator, **in that** the indication of whether or not the voice input system is ready is implemented by mechanical deflection of the operator control element (12) or a portion (13) thereof from a particular position in a manner which directly addresses the tactile sensor system of the controlling hand of the operator.

2. Method according to Claim 1, **characterized in that** the deflection is automatically ended or reset if the voice input system (10, 11), having being activated, is no longer in the ready state (T).

3. Method according to Claim 1 or 2, **characterized in that** the indication of readiness is provided by a statistical change in the shape of the operator control element (12) or a portion (13) thereof.

4. Method according to Claim 1 or 2, **characterized in that** the indication of readiness is provided by a change in the position of the operator control element (12) or a portion (13) thereof.

5. Method according to Claim 1 or 2, **characterized in that** the indication of readiness is provided by vibration of the operator control element (12) or a portion (13) thereof.

6. Control system for audible control of functions in a motor vehicle using a voice input system (10, 11) which receives spoken commands and converts them into corresponding control signals, having an operator control element (12) which can be manually operated by an operator for the purpose of activating the system, **characterized in that** an indicator apparatus is provided which can be used to provide the operator, upon activation of the voice input system (10, 11), with an indication of the readiness of the system to receive voice commands, **in that** the indicator apparatus has deflecting means (14, 17) for mechanically deflecting the operator control element (12) or a portion (13) thereof which are operatively connected to the voice input system (10, 11) and are actuated thereby, when it is ready, such that the ready state (T) can be directly communicated to the controlling hand of the operator by means of tactile sensing.

7. Control system according to Claim 6, **characterized in that** resetting means (11, 14) act on the indicator apparatus and reset the deflection means (14, 17) directly after the end of the ready state (T) of the voice input system.

8. Control system according to Claims 6 or 7, **characterized in that** the operator control element (12) is a switch or pushbutton on the steering wheel (15).

9. Control system according to one of Claims 6 to 8, **characterized in that** the deflection means (14, 17) have retaining means (14) which keep a switching element (13) of the operator control element (12), particularly a pushbutton or switching pushrod thereof, which can be engaged by a finger of the operator for the purpose of activating the voice input system, statically in the engaged state during the ready state (T) .

10. Control system according to one of Claims 6 to 9, **characterized in that** the deflection means (14, 17) have, as retaining means (14), an electromagnet acting on the operator control element (12), particularly the pushbutton or switching element (13), in force-locking and/or form-locking fashion.

11. System according to one of Claims 6 to 8, **characterized in that** the deflection means have vibration means which cause the operator control element, particularly a pushbutton or switching pushrod of the pushbutton or switch fitted on the steering wheel, to vibrate during the ready state of the voice input system.

## Revendications

1. Dispositif pour la commande fonctionnelle acoustique dans le véhicule automobile au moyen d'un système d'entrée vocale (10, 11) réceptionnant des instructions vocales et les convertissant en signaux de commande correspondants, qui est activable via un élément de manoeuvre (12) à manoeuvrer manuellement, **caractérisé en ce que** suite à son activation, une indication est emise à l'attention d'un opérateur de sa disponibilité à réceptionner une instruction vocale, **en ce que** l'indication si le système d'entrée vocale est prêt ou non est réalisée par une déviation mécanique de l'élément de manoeuvre (12) déclenchant directement le système de palpeur dans la main de commande de l'opérateur ou une partie (13) de ce dernier, à partir d'une position déterminée.

2. Procédé selon la revendication 1, **caractérisé en ce que** la déviation prend fin ou est rappelée automatiquement lorsque l'état de disponibilité (T) du système d'entrée vocale (10, 11) n'est plus présent après son activation.

3. Procédé selon la revendication 1 ou 2, **caractérisé en ce que** l'indication de disponibilité s'effectue par une variation statistique de la forme de l'élément de manoeuvre (12) ou d'une partie de ce dernier (13).

4. Procédé selon la revendication 1 ou 2, **caractérisé en ce que** l'indication de disponibilité s'effectue par une variation de position de l'élément de manoeuvre (12) ou d'une partie de ce dernier (13).

5. Procédé selon la revendication 1 ou 2, **caractérisé en ce que** l'indication de disponibilité s'effectue par une vibration de l'élément de manoeuvre (12) ou d'une partie de ce dernier (13).

6. Système de commande pour la commande fonctionnelle acoustique dans le véhicule automobile au moyen d'un système d'entrée vocale (10, 11) réceptionnant des instructions vocales et les convertissant en signaux de commande correspondants, avec un élément de manoeuvre (12) à manoeuvrer manuellement par un opérateur pour l'activation du système, **caractérisé en ce qu'**il est prévu un système d'indication permettant de donner à l'opérateur, suite à l'activation du système d'entrée vocale (10, 11) une indication de la disponibilité du système à réceptionner des instructions vocales, **en ce que** le dispositif d'indication comporte des moyens de déviation (14, 17) pour la déviation mécanique de l'élément de manoeuvre (12) ou d'une partie de ce dernier (13), qui sont en interaction avec le système d'entrée vocale (10, 11) et qui sont actionnés par ce dernier, en cas de disponibilité de ce dernier, de sorte que l'état de disponibilité (T) soit susceptible d'être indiqué par palpeur directement à la main de commande de l'opérateur.

7. Système de commande selon la revendication 6, **caractérisé en ce que** des moyens de rappel (11, 14) rappelant les moyens de déviation (14, 17) directement à la fin de l'état de disponibilité (T) du système d'entrée vocale agissent sur le dispositif d'indication.

8. Système de commande selon la revendication 6 ou 7, **caractérisé en ce que** l'élément de manoeuvre (12) est un interrupteur ou une touche sur le volant (15).

9. Système de commande selon l'une quelconque des revendications 6 à 8, **caractérisé en ce que** les moyens de déviation (14, 17) comportent des moyens de retenue (14) maintenant statiquement en position embrayée un organe de commutation (13) de l'élément de manoeuvre (12) susceptible d'être embrayé par un doigt de l'opérateur pour l'activation du système d'entrée vocale, notamment un poussoir de manipulation ou de commutation de ce dernier pendant l'état de disponibilité (T).

10. Système de commande selon l'une quelconque des revendications 6 à 9, **caractérisé en ce que** les moyens de déviation (14, 17) comportent en tant que moyen de retenue (14) un électroaimant agissant par complémentarité de force et/ou de forme sur l'élément de manoeuvre (12) notamment sur l'organe de manipulation ou de commutation (13).

11. Système selon l'une quelconque des revendications 6 à 8, **caractérisé en ce que** les moyens de déviation comportent des moyens de vibration qui provoquent une vibration de l'élément de manoeuvre, notamment d'un poussoir de manipulation ou de commutation de la touche ou de l'interrupteur monté sur le volant pendant l'état de disponibilité du système d'entrée vocale.
